# EUROPÄISCHE PATENTSCHRIFT

(11) **EP 0 359 014 B1**
(45) Veröffentlichungstag und Bekanntmachung des Hinweises auf die Patenterteilung: **05.10.1994**
(21) Anmeldenummer: 89115785.1
(22) Anmeldetag: 26.08.1989
(51) Int. Cl.: B29C 45/17, B65G 65/00

(54) **Vorrichtung für den Abtransport von Spritzteilen aus einer Kunststoff-Spritzgiessmachine**
Apparatus for removing moulded articles from a plastic injection-moulding machine
Dispositif d'évacuation de pièces injectées d'une machine à mouler des matières plastiques par injection

(30) Priorität: 12.09.1988 DE 3830958
(43) Veröffentlichungstag der Anmeldung: 21.03.1990
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 042 972
- WO-A-88/03082
- DE-A- 3 644 915
- PATENT ABSTRACTS OF JAPAN, Band 9, Nr. 226 (M-412)[1949], 12. September 1985;& JP-A-60 82 529 (MOTODA DENSHI KOGYO K.K.) 10-05-1985
- PATENT ABSTRACTS OF JAPAN, Band 7, Nr. 29 (M-191)[1174], 5. Februar 1983;& JP-A-57 184 001 (MITSUBISHI KINZOKU K.K.) 12-11-1982
- PATENT ABSTRACTS OF JAPAN, Band 10, Nr. 142 (M-481)[2199], 24. Mai 1986;& JP-A-60 262 776 (HITACHI SEIKO K.K.) 26-12-1985
- PATENT ABSTRACTS OF JAPAN, Band 11, Nr. 39 (M-559)[2486], 5. Februar 1987;& JP-A-61 206 709 (MOTODA ELECTRONICS CO., LTD) 13-09-1986

## Beschreibung

Die Erfindung betrifft eine Vorrichtung entsprechend dem Oberbegriff des Patentanspruches 1.

Aus der US-A 4,687,403 ist eine Stapeleinrichtung bekannt, die aus Palettenstapeln einzelne Paletten entnimmt, um Produkte, Zwischenprodukte oder Teile aus den Paletten zu entnehmen oder den Paletten zuzuführen. Eine derartige Vorrichtung ist grundsätzlich auch für den Einsatz an einer Spritzgießmaschine geeignet. Einzelne Stapeleinheiten werden dabei so gehandhabt, daß von unten nach oben einzelne Paletten vereinzelt werden und sodann die vereinzelte Stapelpalette aus der Stapeleinheit herausgezogen wird. Während eine Palette herausgezogen ist, kann die verbleibende Stapeleinheit nicht unabhängig davon bewegt werden, da der obere Teil der Stapeleinheit an Betätigungsgliedern festgehalten wird. Erst nach einer entsprechenden Freisetzungsbewegung und nach Einführen der nunmehr gefüllten Stapelpalette in die Stapeleinheit läßt sich diese Stapeleinheit wieder vertikal bewegen. Nach Füllung der gesamten Stapeleinheit wird sie aus dem "Palettenturm" herausgeschoben. Insofern liegt kein frei beweglicher Fahrstuhl vor, so daß die Befüllung und gleichzeitige Übergabe von Stapeleinheiten an ein Transportmittel nicht möglich sind.

Bei einer bekannten Vorrichtung dieser Art (DE 36 44 915 A1) werden die aus dem Spritzwerkzeug fallenden Spritzteile mittels Förderbänder in einen in Füllstation befindlichen Spritzteilebehälter eingefüllt. Eine Übergabeeinrichtung übergibt den gefüllten Spritzteilebehälter auf ein parallel zur vertikalen Symmetrieebene der Spritzgießmaschine linear verfahrbares Transportfahrzeug, das auch für den Transport auszuwechselnder Spritzwerkzeuge derart eingerichtet ist, daß gleichzeitig ein Spritzteilebehälter und ein Spritzwerkzeug transportiert werden können. Trotz einer solchen Rationalisierung des Abtransports kann es zu zeitlichen Engpässen kommen, wenn viele Transportbewegungen in kurzer Zeit erforderlich sind, zumal in der Regel nur ein einziges Transportfahrzeug auf der zugehörigen Führungsbahn fahren kann.

Der Erfindung liegt die Aufgabe zugrunde, eine Vorrichtung der eingangs genannten Art derart weiterzubilden, daß die zeitlichen Beanspruchungen des die Teilebehälter abtransportierenden Transportmittels wesentlich verringert werden, wobei die Übergabeeinrichtung der Vorrichtung sowohl für den Abtransport voller Paletten aus der Füllstation als auch für die Zufuhr leerer Paletten in die Füllstation ausgebildet ist.
Diese Aufgabe wird erfindungsgemäß durch die im Patentanspruch 1 genannten Merkmale gelöst.

Bei einer solche Lösung können im Gefolge von periodischen Vertikalbewegungen des Fahrstuhles mit gefüllten Stapeleinheiten 55 Transporteinheiten gebildet werden, die rückseitig aus dem Palettenturm ausziehbar sind. Andererseits sind im Palettenturm stets leere Stapelpaletten 55 für das periodische Einschieben in die Füllstation verfügbar, die dem Palettenturm in Gestalt von Transporteinheiten rückseitig zugeführt werden.

Bei einer Ausbildung nach Anspruch 2 ist bei einem einfachen Aufbau der Übergabeeinrichtung ein ebenso einfaches Paletten-Übergabeverfahren möglich, bei dem sich eine Stapelpalette für leere Transportpaletten wechselweise über dem und unter dem Ein- bzw. Ausfahrniveau der Paletten in den Stapelturm bzw. aus dem Stapelturm befindet.

Eine Ausbildung nach Anspruch 3 gewährleistet eine Anpassung an unterschiedlich hohe Stapelpaletten für unterschiedlich große Spritzteile bei Bildung von standardisierten Transporteinheiten gleicher Größe.

Eine Ausbildung nach Anspruch 4 ermöglicht eine berührungslose Steuerung des Paletten-Übergabebetriebes.

Eine weitere Ausbildung nach den Ansprüchen 5 und 6 schafft die Voraussetzung, daß die Transporteinheiten mit den Transportpaletten mit dem gleichen Transportwagen transportiert werden können wie die Spritzwerkzeuge beim Wechsel des Spritzwerkzeuges.

Eine Ausbildung nach Anspruch 7 schafft zur Anpassung an vorgegebene Räumlichkeiten Alternativen in der räumlichen Zuordnung des Palettenturms zur Kunststoff-Spritzgießmaschine.

Die Ansprüche 8 und 9 stellen zwei alternative Abstützungsmöglichkeiten der Palettenführungen 59 am Palettenturm zur Verfügung, wobei die Alternative des Anspruches 8 eine unmittelbare Abstützung am Skelett des Palettenturmes und die Alternative des Anspruches 9 eine Abstützung auf der jeweils nächst unteren Palette bzw. auf der Transportpalette realisiert, welche letztere am Fahrstuhl selbst abgestützt ist.

Durch die Ausbildung nach Anspruch 10 ist ein stabiler Aufbau der Transporteinheit gewährleistet, in dem die einzelnen Transportpaletten der Transporteinheit nur unter Überwindung von Friktionskräften relativ zueinander bewegbar sind.

Nachstehend wird die Erfindung anhand der Zeichnung an einem Ausführungsbeispiel erläutert.

Es zeigen:
- Fig. 1: die Vorrichtung an einer Spritzgießmaschine in perspektivischer Darstellung (Füllstation des Teilebehälters innerhalb der Grundrißfläche der Spritzgießmaschine),
- Fig. 2, 3: die in eine Spritzgießmaschine integrierte Vorrichtung in Draufsicht und in Stirnansicht,
- Fig. 4, 5: eine Variante der Vorrichtung (Füllstation außerhalb der Grundrißfläche der Spritzgießmachine),
- Fig. 6-8: den als Stapelpalette ausgebildeten Spritzteilebehälter der Vorrichtung in vergrößerter Darstellung aus unterschiedlichen Blickrichtungen,
- Fig. 9-11: je ein mehrere Stapelpaletten umfassende Stapeleinheit auf einer Transportpalette und
- Fig. 12a-12f und 12a'-12f': Schematas zur Verdeutlichung des automatischen Stapelvorgangs zu Bildung von Transporteinheiten, die je aus einer Stapeleinheit und einer Transportpalette aufgebaut sind,
- Fig. 13 und folgende: eine Variante der Stapelpalette der Vorrichtung.

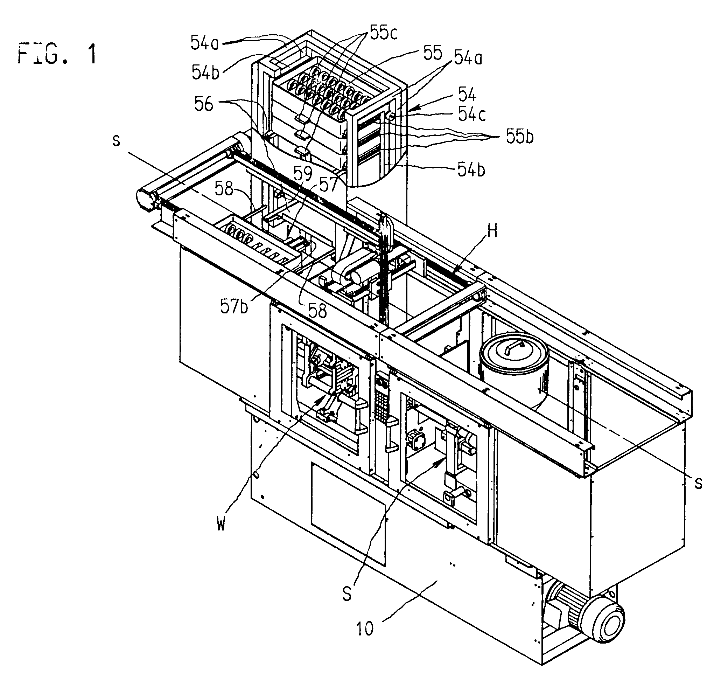

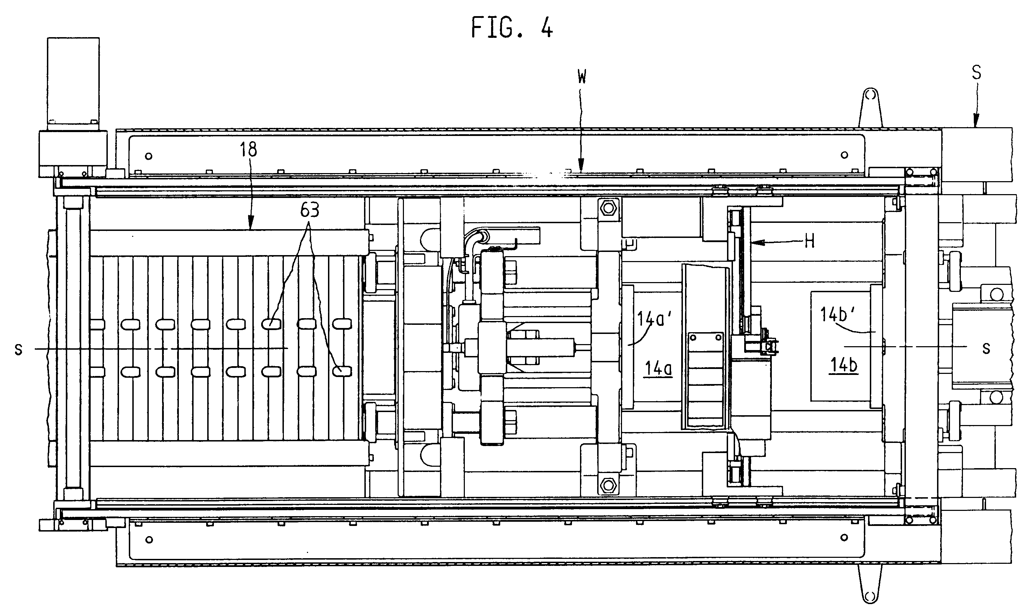

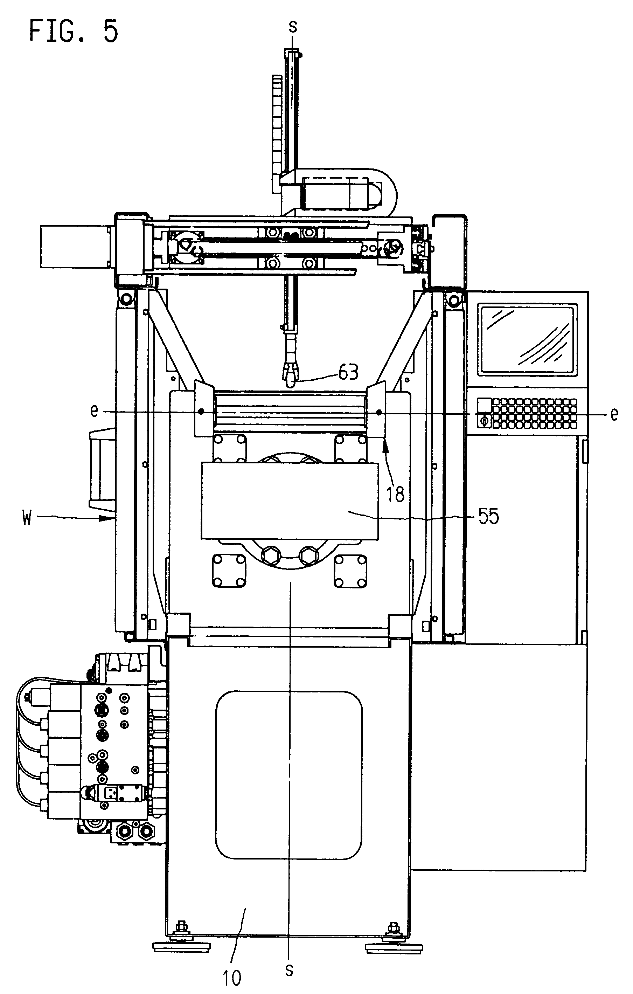

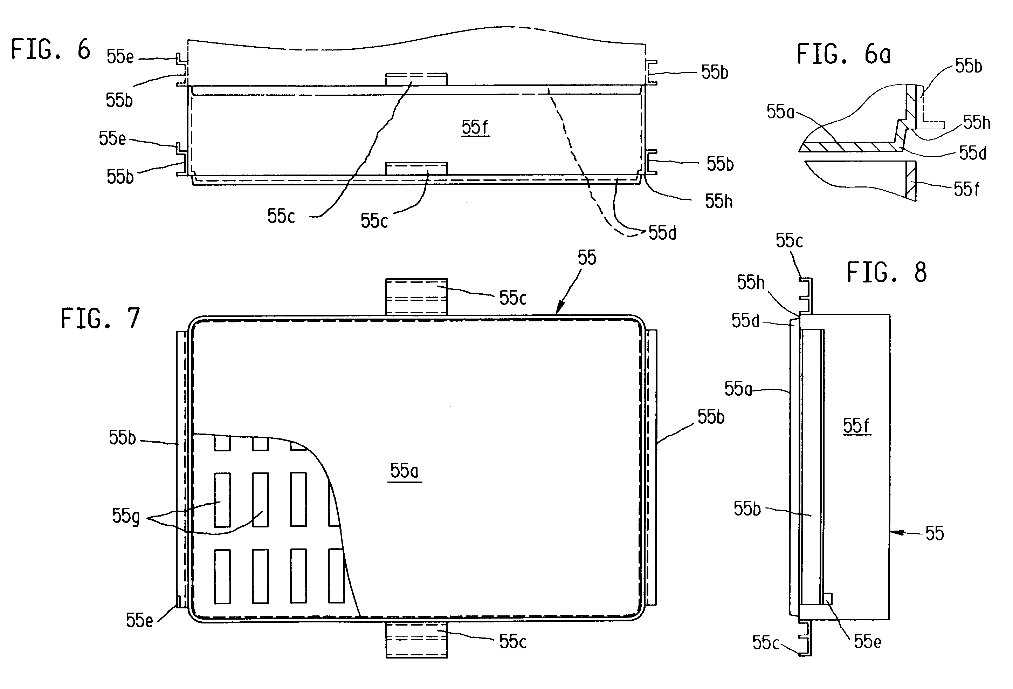

Die Spritzgießmaschine, an welcher die Vorrichtung verwirklicht ist, umfaßt eine horizontale Spritzgießeinheit S und eine horizontal angeordnete Werkzeugschließeinheit W. Beide Einheiten sind auf einem Maschinengestell 10 abgestützt. Der Abtransport der beim Spritzbetrieb anfallenden Spritzteile 63 aus der Spritzgießmaschine geschieht mit Hilfe von Stapelpaletten 55. Dieser werden in einer Füllstation im Bereich der Spritzgießmaschine gefüllt. Im kohkreten zeichnerisch dargestellten Ausführungsbeispiel ist die Füllstation wahlweise innerhalb der Spritzgießmaschine (Fig. 1 bis 3) oder außerhalb derselben im Bereich der die Werkzeugschließeinheit begrenzenden Stirnseite angeordnet (Fig. 4,5). Im ersten Fall wird die Stapelpalette 55 mit Hilfe einer die Spritzteile 63 aus der geöffneten Spritzgießform entnehmenden Entnahmeeinrichtung H gefüllt. Dabei werden die Spritzteile reihenweise unter Fixierung in Mulden 55g (Fig. 7) im Gefolge einer stufenweisen Bewegung des Greifers quer zur Symmetrieebene s-s abgelegt. Im zweiten Fall wird die Stapelpalette 55 mittels eines Förderbandes 18 gefüllt, welches die Spritzteile parallel zur Symmetrieebene s-s transportiert. Das Förderband 18 wird seinerseits vom Greifer der Entnahmeeinrichtung beschickt. Möglich ist aber auch die Füllung der Stapelpalette 55 mittels eines Förderbandes, das die aus der geöffneten Spritzgießform ausfallenden Spritzteile aufnimmt (Figur 5).

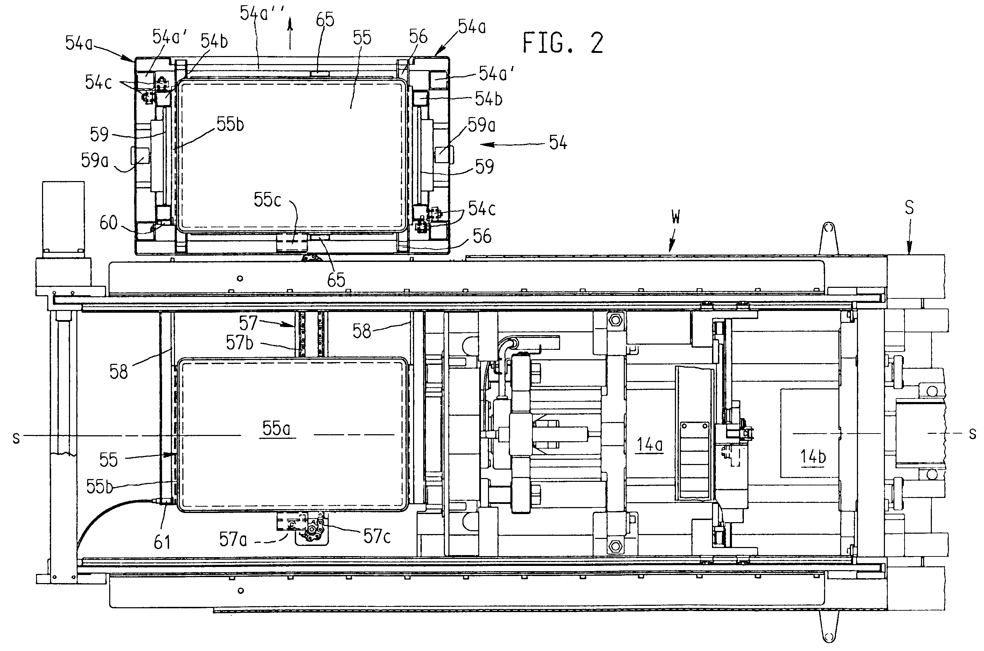

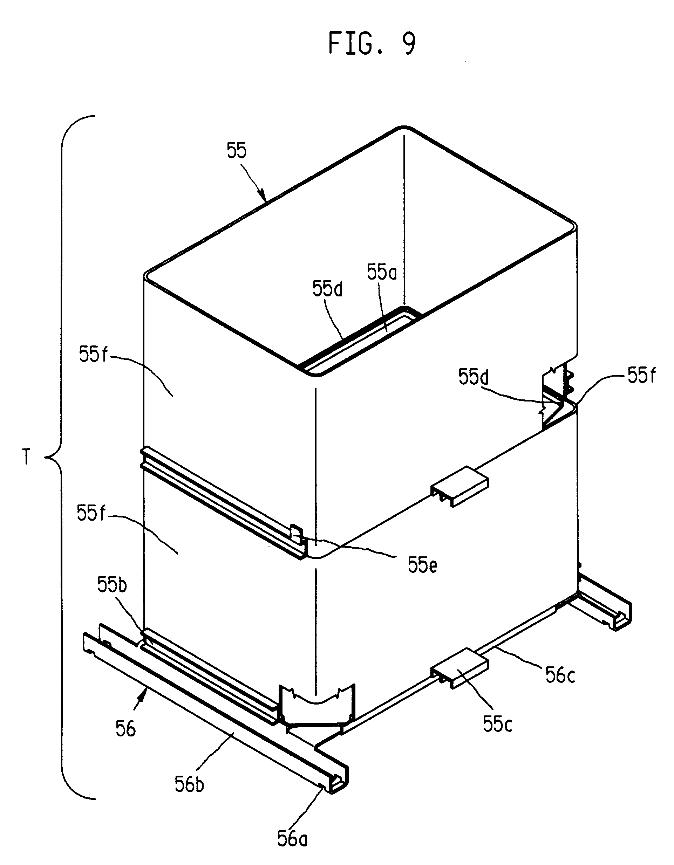

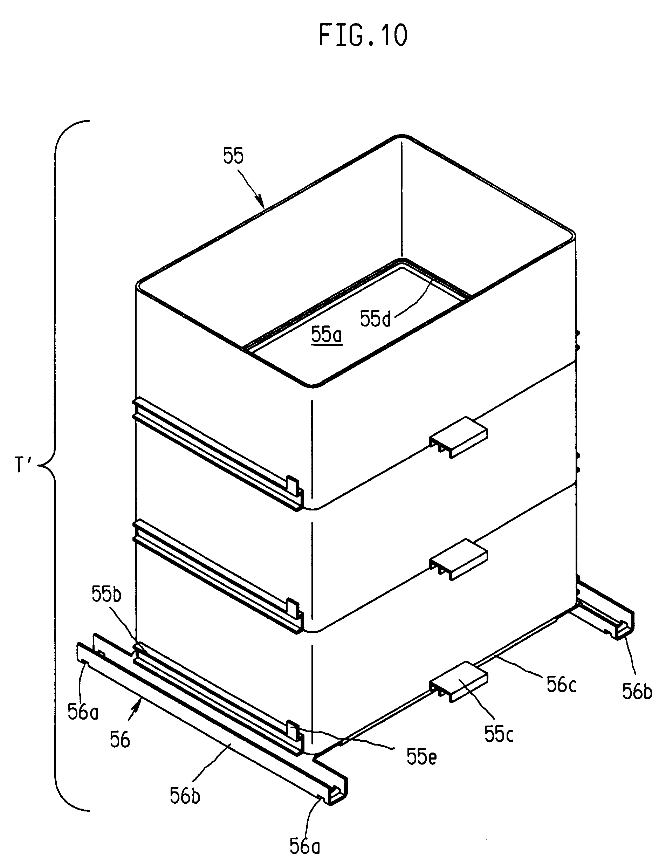

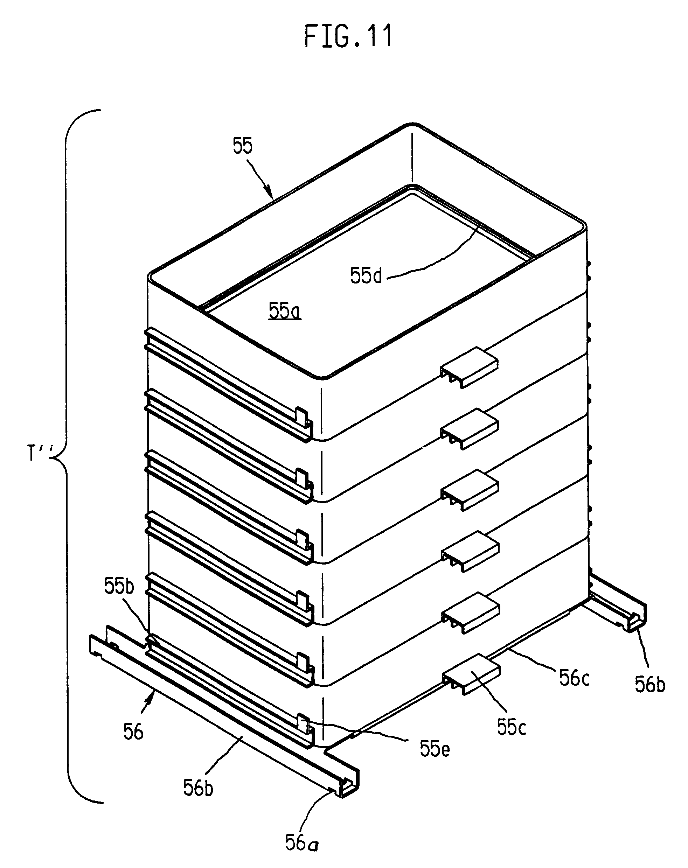

Die Stapelpaletten 55 sind derart ausgebildet, daß sie unter gegenseitiger Zentrierung zu Stapeleinheiten stapelbar sind. Die Stapelung zu Stapeleinheiten erfolgt in einem Palettenturm 54, der zwischen der Füllstation und einem weiteren Transportmittel, z.B. einem Transportfahrzeug oder einer Rollenbann angeordnet ist. Der Palettenturm 54 ist im konkreten zeichnerischen Ausführungsbeispiel an der Rückseite der Spritzgießmaschine außerhalb deren Grundrißfläche angeordnet. Er ist auf dem Boden abgestellt und überragt die Spritzgießmaschine nach oben. An vertikalen Skelettelementen 54a' des Profilskelettes 54a des Palettenturms 54 ist ein Fahrstuhl 54b* verfahrbar. Am Profilskelett 54a sind zwei Palettenführungen abgestützt, die im folgenden als verstellbare Palettenführungen 59 bezeichnet werden. Diese sind nämlich auf größren gegenseitigen Abstand verstellbar. Die Stapelpaletten 55 sind auf stationären Palettenführungen 58 und den verstellbaren Palettenführungen 59 aus der Füllstation in den Palettenturm 54 einführbar. Im Palettenturm 54 sind sie im Gefolge einer Vertikalbewegung des Fahrstuhles 54b mit einer an diesem abgestützten Transportpalette 56 zu einer Transporteinheit T;T';T'' (Fig. 9 bis 11) verbindbar. Die verstellbaren Palettenführungen 59 sind je an der Kolbenstange eines am Profilskelett 54a des Palettenturmes 54 abgestützten Hydraulikzylinders 59a befestigt. Die die Stapelpalette 55 aus der Füllstation in den Palettenturm 54 und umgekehrt verschiebende Antriebseinrichtung umfaßt eine endlose Kette 57b. Diese ist unterhalb der in Füllstation befindlichen Stapelpalette 55 angeordnet. Wie aus Fig. 2 ersichtlich, sind die Achsen der als Gliederkette ausgebildeten endlosen Kette senkrecht angeordnet, wobei wenigstens ein Mitnehmerstift 57a nach oben aus der Kette herausragt. Dieser ist im Gefolge einer halbkreisförmigen Bewegung am Kettenrad 57c mit der in Füllstation befindlichen oder mit einer im Palettentum 54 befindlichen Stapelpalette 55 kuppelbar. Die Kupplung erfolgt dadurch, daß der Mitnehmerstift 57a im Gefolge einer seitlichen Einsteuerung ein an der Stapelpalette 55 befestigtes Mitnehmerelement* hintergreift. Der Fahrstuhl 54b von rechteckigem Grundriß umfaßt vier vertikale, durch Rohrprofile gebildete Säulen, die durch Querelemente miteinander verbunden sind. Der Fahrstuhl ist mittels einer am Profilskelett 54a abgestützten Hubspindeleinrichtung 62a,62b** vertikal verfahrbar. Eine am Fahrstuhl 54b befestigte Gewindemutter 62b befindet sich im Eingriff mit der rotierenden Gewindespindel 62a der Hubspindeleinrichtung. Die Stapelpalette 55 als solche weist einen Palettenboden auf, der für die fixierende, reihenweise Ablage der Spritzteile 63 eingerichtet ist. Zur Fixierung dienen Mulden 55g, die der jeweiligen Gestalt der Spritzlinge angepaßt sind (Fig. 7). Der Böden 55a ist von einer vertikalen Schutzwandung 55f umschlossen. Die Grundfläche des Bodens 55a ist, wie insbesondere aus den Figuren 6,8 erkennbar, kleiner als der Grundriß der Schutzwand. Außerdem geht der Boden über einen zur Vertikalen geringfügig geneigten Zentrierbereich 55d (Fig. 6a) in die vertikale Schutzwand über. Die jeweils obere Stapelpalette ruht mit horizontalen Stützflächen 55h auf der Schutzwandung 55f der unteren Stapelpalette und greift in die Schutzwand der unteren Stapelpalette ein. Stapelpaletten 55 gleicher Schutzwandhöhe sind zu Stapeleinheiten stapelbar, die gleiche äußere Abmessungen aufweisen. Je nachdem in der Stapeleinheit Stapelpaletten 55 mit höherer oder niederer Schutzwand vereinigt sind, umfaßt die Stapeleinheit eine andere Anzahl von Stapelpaletten. So zeigen die Figuren 9 bis 11 eine Stapeleinheit mit zwei, drei und sechs Stapelpaletten. Dabei sitzen die Stapeleinheiten je auf einer Transportpalette 56 zentrierend auf und bilden mit dieser je eine Transporteinheit. Die Transportpalette 56 weist ein das Auflageprofil eines Spritzwerkzeuges 14a,14b nachbildendes Auflageprofil auf. Dieses Auflageprofil besteht aus zwei parallelen Führungsschienen 56b die über wenigstens einen Quersteg miteinander verbunden sind. Das Querschnittsprofil der Führungsschienen 56b entspricht dem Querschnittsprofil der Anlageplatten 14a′,14b′ des Spritzwerkzeuges 14a,14b (Fig. 9,10). Auf die Bedeutung dieser Entsprechung ist weiter unten einzugehen.
* mittels Rollen 54c
* 55c
** dt Hubmotor 62

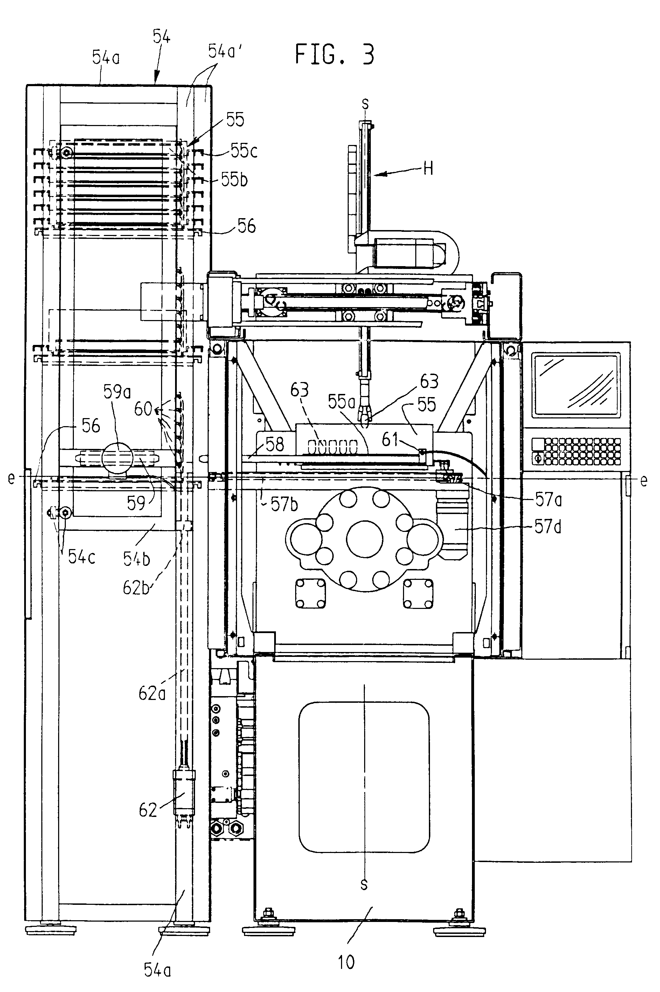

Der Palettenturm 54 ist mehr als doppelt so hoch wie der Fahrstuhl 54b. In diesem sind im konkreten zeichnerisch dargestellten Ausführungsbeispiel drei Transporteinheiten T;T′;T˝ übereinander aufnehmbar. Darüberhinaus sind im Fahrstuhl 54b mehrere Transportpaletten 56 in einem gegenseitigen Abstand abstützbar, welcher mindestens der Höhe einer Transporteinheit entspricht. Von den drei Transportpaletten 56 des Fahrstuhles 54b ist eine dazu bestimmt, mit Stapelpaletten 55, die mit Spritzlingen 63 gefüllt sind (volle Stapelpaletten), eine Transporteinheit T;T′;T˝ zu bilden. Die beiden anderen Transportpaletten 56 sind dazu bestimmt, mit leeren Transportpaletten 55 Transporteinheiten zu bilden. Die Transporteinheiten sind in einer bestimmten Höhe, welche dem Niveau der Füllstation entspricht, rückseitig aus dem Palettenturm 54 ausfahrbar bzw. einfahrbar. Schließlich sind am Fahrstuhl 54b des Palettenturmes 54 je über den für die Transportpaletten 56 vorgesehenen Positionen berührungslos arbeitende Signalgeber 60 zur Palettenerkennung angeordnet. Die Anzahl der Signalgeber 60 über jeder Transportpalette entspricht der in einer Stapeleinheit größtmöglichen Palettenanzahl. Ihr gegenseitiger Abstand entspricht einer Stapelpalette mit niedrigster Schutzwand. Auch an der Schmalseite der Füllstation ist zur Stapelpalettenerkennung ein berührungslos arbeitender Signalgeber 61 angeordnet. Die bei der Variante gemäß den Figuren 1 bis 3 innerhalb der Grundrißfläche der Spritzgießmaschine angeordnete Füllstation kann mit einem relativ geringen Montageaufwand in die Variante gemäß den Figuren 4,5 umgewandelt werden, bei welcher die Füllstation außerhalb der Grundrißfläche der Spritzgießmaschine liegt. Bei dieser Variante liegt die Füllstation vor derjenigen Stirnseite der Spritzgießmaschine, die der Werkzeugschließeinheit W benachbart ist. Der Montageaufwand für die Umwandlung der Variante gemäß den Fign. 1 bis 3 in die Variante gemäß den Figuren 4 und 5 und umgekehrt, beschränkt sich im wesentlichen darauf, daß anstelle der stationären Palettenführungen 58 der Füllstation auf gleichem Höhen-Niveau ein endloses Förderband 18 in die Spritzgießmaschine eingefügt wird umgekehrt. Auf die Förderfläche dieses Förderbandes 18 werden die Spritzteile 63 von der Entnahmeeinrichtung in eine Position abgelegt, die der Ablegeposition im Falle der Füllung von Stapelpaletten gemäß der Variante der Fign. 1 bis 3 entspricht. Somit sind die stationären Palettenführungen 58 der Füllstation gemäß der Variante der Fign. 1 bis 3 und die Förderfläche des Förderbandes in der Variante gemäß den Fign. 4 und 5 etwa in der gleichen horizontalen Ebene e-e (Fig. 3) angeordnet, die etwa in der Höhe der Oberkante des Spritzwerkzeuges 14a,14b liegt.

Aus dem Palettenturm 54 werden die dort gebildeten Transporteinheiten T;T′;T˝ auf das weitere Transportmittel, vorzugsweise auf ein parallel zur Symmetrieebene s-s verfahrbares Transportfahrzeug (zeichnerisch nicht dargestellt) überführt. Ein solches Transportfahrzeug ist aus der DE 36 17 094 C2 bekannt, weshalb hierauf nicht näher einzugehen ist. Hinzuweisen ist lediglich darauf, daß das bekannte Transportfahrzeug F dazu bestimmt und geeignet ist, mit seinen Führungs- und Halterungsorganen gleichzeitig oder abwechselnd, jedoch wahlweise Spritzwerkzeuge oder Transporteinheiten zu transportieren, welch letztere eine Transportpalette mit einem Auflageprofil umfassen, welches Auflageprofil dem Auflageprofil des Spritzwerkzeuges entspricht.
Das Profil der Anlageplatten 14a′,14b′ des Spritzwerkzeuges wird durch die Führungsschienen 56b der Transportpalette 56 simuliert. Die Möglichkeit, mit dem Transportfahrzeug F gleichermaßen Transporteinheiten und Spritzwerkzeuge auf den gleichen Stellflächen zu transportieren, bedeutet eine wesentliche Rationalisierung des Transportsystems der Spritzgießmaschine. Dazu gehört, daß das Transportfahrzeug mit einer Übernahmeeinrichtung bzw. einer Übergabeeinrichtung versehen ist, welche dazu bestimmt und geeignet ist, das Spritzwerkzeug 14a,14b bzw. eine Transporteinheit (die dort aus einer Transportpalette und einem Plastifizierzylinder besteht) quer zur Fahrtrichtung des Transportfahrzeuges zu verschieben. Als Antriebs- und Verschiebemittel umfaßt die Übernahmeeinrichtung bzw. Übergabeeinrichtung vorzugsweise eine endlose Transportkette. Aufgrund dieser baulichen voraussetzungen können gefüllte Stapeleinheiten aus dem Palettenturm 54 auf das Transportfahrzeug herübergezogen bzw. leere Transporteinheiten vom Transportfahrzeug in den Palettenturm 54 eingeschoben werden. Für diese Übergabe-bzw. Übernahmevorgänge ist die endlose Kette der Übernahmeeinrichtung bzw. Übergabeeinrichtung des Transportfahrzeuges mit wenigstens einem Mitnehmerstift und wenigstens eine Führungsschiene 56b der Transportpalette 56 mit einer Quernut 56a versehen. In diese ist der Mitnehmerstift der Kette zur Kupplung einsteuerbar bzw. zur Entkupplung aussteuerbar.

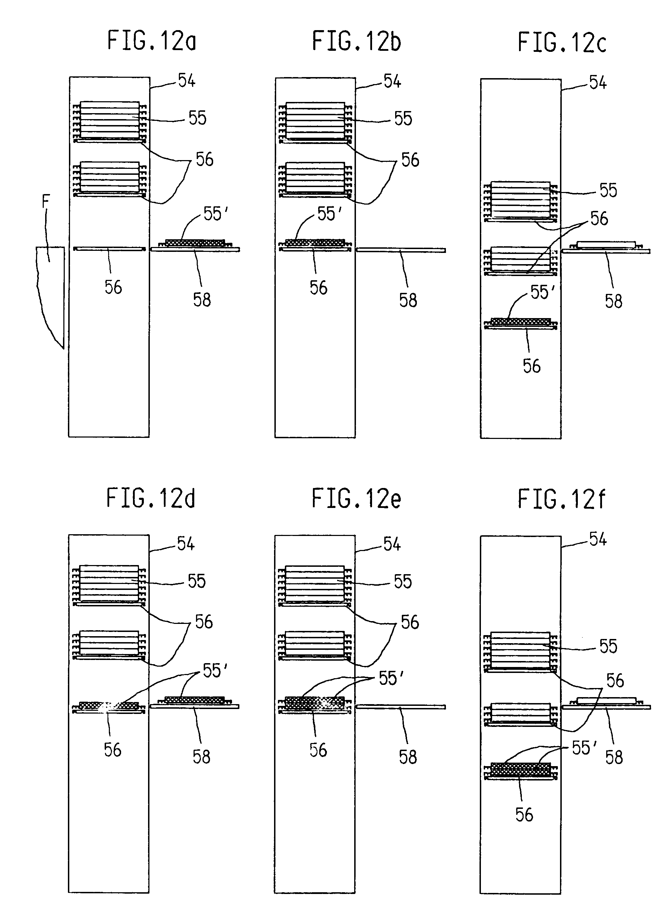

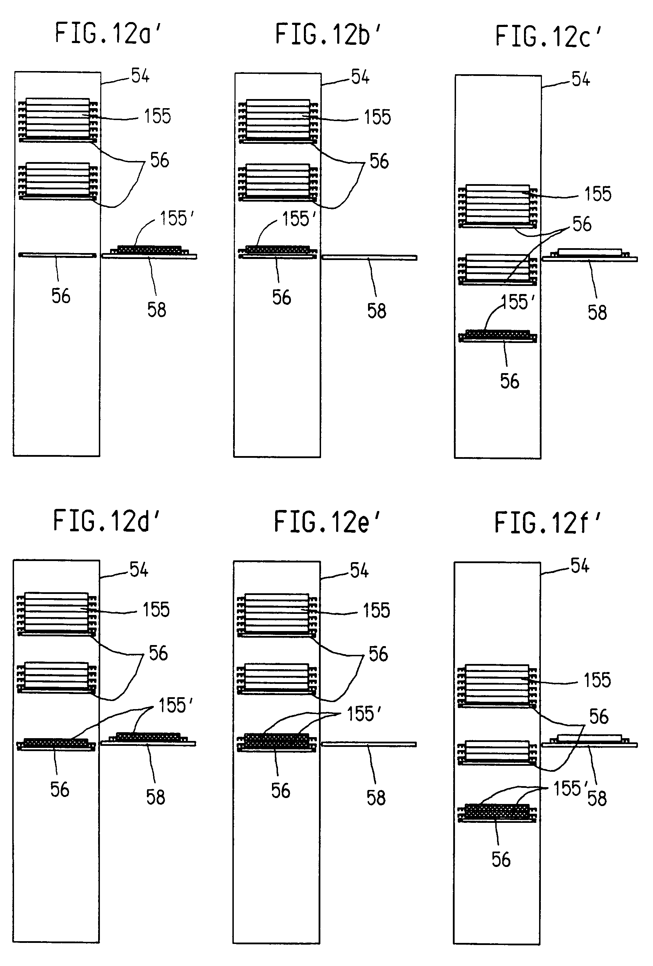

In den Fign. 12a-12f ist verdeutlicht, in welchen konkreten Verfahrensschritten die Transportpaletten 55 zu Transporteinheiten T;T′;T˝ aufgebaut werden: In Fig. 12a befindet sich die gefüllte Stapelpalette 55′ noch im Bereich der Spritzgießmaschine. Im Palettenturm 54 sind im Fahrstuhl im oberen Bereich zwei Transporteinheiten angeordnet, die leere Transportpaletten 55 enthalten.

Diese beiden Transporteinheiten sind über einer leeren Transportpalette 56 angeordnet.

Aus Figur 12b ist ersichtlich, daß nunmehr die gefüllte Stapelpalette 55' von der Füllstation auf die verstellbaren Führungen 59 des Palettenturmes eingeschoben und im Anschluß an die Einschiebung der Fahrstuhl 54b geringfügig so weit nach oben bewegt ist, daß die leere Transportpalette 56 sich zentrierend an die Unterseite der eingefahrenen Stapelpalette 55' angelegt hat. Danach werden die Palettenführungen 59 mittels der Hydraulikzylinder 59a auf den größeren gegenseitigen Abstand gesteuert, so daß der Fahrstuhl für eine Vertikalbewegung frei ist. Danach fährt der Fahrstuhl 54b mit Hilfe der Hubspindeleinrichtung 62a,62b in eine Position wie in Figur 12c angedeutet. In dieser Position befindet sich die oberste leere Stapelpalette 55 der oberen Transporteinheit in Höhe der auf großen Abstand gesteuerten Führungsleisten 59. Diese Führungsleisten werden sodann auf kleinen gegenseitigen Abstand verstellt, in welchem sie die oberste Stapelpalette 55 abstützen. Bevor diese leere Stapelpalette 55 in die Füllstation eingefahren werden kann, muß sie aus ihrem Palettenstapel freigesetzt werden. Zu diesem Zweck wird der Fahrstuhl nach unten bewegt, bis die Stapelpalette für eine Horizontalbewegung frei ist. Nunmehr wird die leere Stapelpalette 55 mit Hilfe der Antriebseinrichtung 57 auf den Palettenführungen 58,59 in die Füllstation überführt, wo sie auf den stationären Palettenführungen 58 ruht. Dies ist die in Fig. 12c dargestellte Position, in welcher die Füllung der Stapelpalette in der Füllstation erfolgt. Währenddessen wird der Fahrstuhl 54b nach erneuter Verstellung der verstellbaren Palettenführungen 59 auf größeren gegenseitigen Abstand wieder nach oben in eine Position gemäß Fig. 12d gefahren, in welcher die weitere, gefüllte Stapelpalette 55' in den Fahrstuhl eingefahren werden kann. Nach dem Einfahren (Fig. 12e) wurde die mit einer Stapelpalette 55' belegte Transportpalette 56 im Gefolge einer geringfügigen vertikalen Fahrbewegung des Fahrstuhls so weit nach oben gefahren, daß sich beide gefüllte Stapelpaletten 55' in Stapelposition befinden, d.h. bis die Schutzwand der unteren gefüllten Stapelpalette 55' den Böden der oberen Stapelpalette 55' zentrierend umgreift. Sodann werden die verstellbaren Palettenführungen 59 wiederum auf großen Abstand gesteuert, so daß der Fahrstuhl wieder für eine vertikale Bewegung frei wird. Danach wird der Fahrstuhl in eine Position gemäß Fig. 12f nach unten gefahren usw. Mit den geschilderten Verfahrensschritten wird eine Stapeleinheit T;T';T'' nach der anderen aufgebaut. Nach Aufbau einer Stapeleinheit wird diese rückseitig aus dem Palettenturm 54 herausgezogen und dabei dem Transportfahrzeug übergeben. Sind alle leeren Transportpaletten für den Aufbau der Transporteinheiten verbraucht, so werden dem Palettenturm mit Hilfe des Transportfahrzeuges erneut Transporteinheiten mit leeren Transportpaletten zugeführt, so daß sich eine Situation gemäß Fig. 12a ergibt. Die Verfügbarkeit zweier Transporteinheiten mit leeren Transportpaletten im Palettenturm ermöglicht eine Reduzierung der Totzeiten, die entstehen können, wenn alle leeren Transportpaletten des Palettenturmes bereits verbraucht sind und erst eine volle Transporteinheit ausgefahren werden muß, bevor wieder eine Transporteinheit mit leeren Transportpaletten in den Palettenturm eingefahren wird. Für den geschilderten Verfahrensablauf ist es unerheblich, ob die beiden Transporteinheiten mit den leeren Stapelpaletten über oder unter der gerade im Aufbau befindlichen Transporteinheit mit gefüllten Stapelpaletten liegt. Im Regelfall wird es so sein, daß die Stapeleinheiten mit leeren Stapelpaletten wechselweise oberhalb und unterhalb der mit gefüllten Stapelpaletten aufzubauenden Stapeleinheit angeordnet sind.

Wie aus Fig. 2 ersichtlich, sind die Führungsschienen 56b der Transportpaletten 56 beim Einfahren und Ausfahren der Transporteinheiten T;T';T'' aus dem Palettenturm bzw. beim Einfahren in denselben auf horizontalen Skelettelementen 54a'' des Profilskeletts 54a abgestützt.

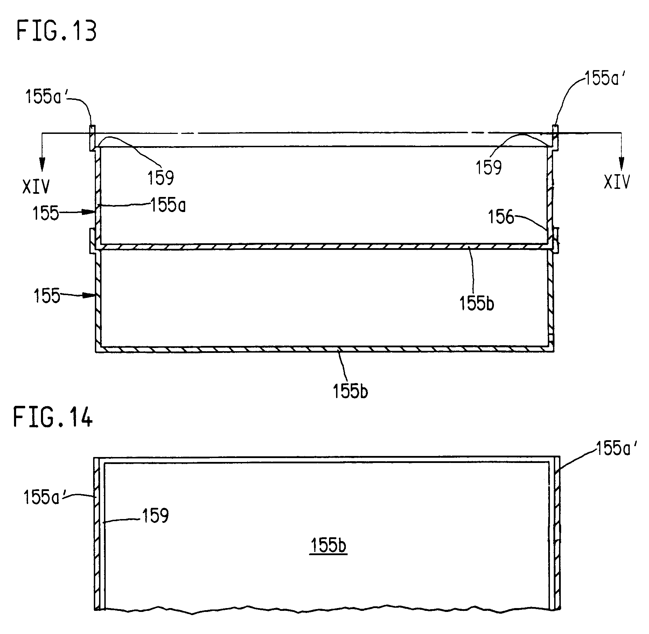

Zur Palettenerkennung im Palettenturm arbeiten die Signalgeber 60 induktiv mit Kodiernasen 55e der Transportpaletten 55 zuzammen. Im Stapelverband ist die jeweils obere Stapelpalette 55 auf ihren Stützflächen 55h (Fig. 6a) auf der Oberkante der Schutzwand der nächst unteren Stapelpalette abgestützt. Die endlose Kette 57b der Antriebseinrichtung 57 in der Füllstation wird mittels des Antriebsmotors 57d angetrieben, wie aus Fig. 3 ersichtlich. Bei der Verschiebung in bzw. aus dem Palettenturm 54 ruhen die Stapelpaletten 55 mit ihren Führungsleisten 55b auf den Palettenführungen 58,59. Die Figuren 13,14 zeigen eine Stapelpalette 155 anderer Gestaltung. Diese ermöglicht eine Vereinfachung des Stapelverfahrens im Palettenturm 54. Bei dieser Variante weisen die beiden parallel zur Verschieberichtung liegenden Wandungen 155a nach außen versetzte Endabschnitte 155a' auf.

Horizontale Stützflächen an der Basis der Endabschnitte 155a' bilden Palettenführungen 159 für eine aus den stationären Palettenführungen 58 der Füllstation kommende volle Stapelpalette 155'. Desweiteren für eine aus dem Palettenturm 54 in die Füllstation zu überführende leere Stapelpalette 155.
Der Quersteg 56c der Transportpalette ist mit Längsführungen versehen, die nach Anordnung und Gestalt den ebenfalls als Führungen dienenden Endabschnitten 155a' der Wandungen 155a der Transportpaletten entsprechen. Beim Aufbau der Transporteinheiten ist daher die unterste Stapelpalette 155 des zu bildenden Stapels auf der am Fahrstuhl 54b abgestützten Transportpalette 56, die darauf folgende auf der jeweils nächst unteren Stapelpalette 155 abgestützt, geführt und zentriert. Somit entfallen die im Ausführungsbeispiel der Fig. 1 bis 12 vorgesehenen, am Profilskelett 54a abgestützten, verstellbaren Palettenführungen 59 und der für sie erforderliche Steuerungsaufwand. Mit den jeweils auf den Palettenführungen 159 der nächstunteren Transportpalette 155 führbaren Transportpaletten 155 ist die Transporteinheit im wesentlichen in gleicher Weise aufbaubar wie mit den Transportpaletten 55 gemäß den Figuren 6-11. Dies kann anhand der Figuren 12a'-12f' verdeutlicht werden: In Fig. 12a' befindet sich eine gefüllte Stapelpalette 155' noch in der Füllstation. Im Palettenturm 54 sind im Fahrstuhl über einer leeren Transportpalette 56 zwei Transporteinheiten angeordnet, welche leere Transportpaletten 155 enthalten.

In Fig. 12b' ist die gefüllte Transportpalette 155' aus der Füllstation auf Palettenführungen der Transportpalette 56 in den Palettenturm 54 eingeschoben, welche Palettenführungen nach Gestalt und Anordnung den Palettenführungen 159 der Stapelpaletten 155 (Fig. 13, 14) entsprechen.

In Fig. 12c' ist der Fahrstuhl so weit nach unten gefahren, daß die oberste leere Stapelpalette 155 der nächstoberen Transporteinheit sich auf Höhe der stationären Palettenführungen 58 der Füllstation befindet. Die genannte oberste leere Stapelpalette 155 ist in der Fig. 12c' auch bereits aus dem Palettenturm in die Füllstation überführt, wo sie auf den Palettenführungen 58 ruht. Während der Füllung dieser leeren Stapelpalette wird der Fahrstuhl wieder nach oben in eine Position gemäß Fig. 12d' gefahren, in welcher die in Füllstation befindliche Stapelpalette bereits in gefülltem Zustand gezeigt ist.

In Fig. 12e' ist die genannte gefüllte Stapelpalette 155' aus der Füllstation auf die auf der Transportpalette 56 ruhende Stapelpalette aufgeschoben. Bei diesem Einschieben ist die gefüllte Stapelpalette teils auf den Palettenführungen 58 der Füllstation, teils auf den Führungen 159 der auf der Transportpalette 56 ruhenden gefüllten Stapelpalette geführt.

In einem weiteren Verfahrensschritt, der in Fig. 12f' bereits vollzogen ist, wird der Fahrstuhl so weit nach unten gefahren, daß die oberste leere Stapelpalette 155 der angebrochenen Transporteinheit mit leeren Stapelpaletten in Höhe der Palettenführungen 58 der Füllstation liegt, um aus dem Palettenturm 54 in die Füllstation eingeschoben zu werden, wie in Fig. 12f' bereits geschehen. Entsprechend dem geschilderten Verfahrensablauf wird eine Stapeleinheit T; T'; T'' nach der anderen aufgebaut. Nach Aufbau einer Transporteinheit mit gefüllten Stapelpaletten 155' wird diese jeweils aus dem Palettenturm 54 rückseitig herausgezogen und dabei zugleich auf ein parallel zur Symmetrieebene s-s der Spritzgießmaschine verfahrbares Transportfahrzeug übergeben.

Sind die leeren Transportpaletten 155 der diesbezüglichen Transporteinheiten im Palettenturm 54 verbraucht, so werden dem Palettenturm mittels des Transportfahrzeuges erneut Transporteinheiten mit leeren Transportpaletten zugeführt, so daß eine Verfahrenssituation gemäß Fig. 12a' vorliegt.

Bei den mit den Stapeleinheiten 155 gemäß den Figuren 13, 14 aufgebauten Transporteinheiten sind die in diesen Transporteinheiten gestapelten Stapelpaletten 155 in ihrer Verschieberichtung durch Friktionskräfte gesichert, die wirksam werden, wenn die jeweils obere Stapelpalette 155 auf den Palettenführungen 159 der jeweils unteren Stapelpalette 155 bzw. aus den korrespondierenden Palettenführungen der Transportpalette 56 herausgeschoben werden. Die Größe dieser Friktionskräfte ist durch die Größe der Vorspannung bestimmt, mit welcher die Endabschnitte 155a' der zur Verschieberichtung parallelen Wandungen 155a der jeweils unteren Transportpalette 155 an den korrespondierenden Wandungen 155a der jeweils oberen Stapelpalette 155 anliegen. Die Friktionskräfte sind so bemessen, daß sie beim Ausziehen der jeweils in Ausziehhöhe (Höhe der stationären Palettenführungen 58 der Füllstation) befindlichen Stapelpalette 155 aus dem Palettenturm 54 ohne weiteres überwunden werden können. Um zu verhindern, daß beim Ausziehen der in Ausziehhöhe befindlichen Stapelpalette 155 auch noch weitere, nicht in Ausziehhöhe befindliche Stapelpaletten 155 aus dem Stapelverband ausgezogen werden, sind an der Vorderseite und an der Rückseite des Palettenturms derart stationäre vertikale Sperrstangen 65 (Fig. 2) angeordnet, daß mit * der jeweils in Ausziehhöhe befindlichen Stapelpalette 155 sämtliche Stapelpaletten des Stapelturms 54 an einer horizontalen Bewegung in Verschieberichtung gehindert sind.
* Ausnahme

## Patentansprüche

1. Vorrichtung für den Abtransport der beim Spritzbetrieb anfallenden Spritzteile (63) aus einer Kunststoff-Spritzgießmaschine mit Hilfe von Spritzteilebehältern, die in einer Füllstation im Bereich der Spritzgießmaschine gefüllt und mittels einer Übergabeeinrichtung auf ein Transportmittel übergeben werden und als stapelbare Paletten (Stapelpaletten 55) ausgebildet sind, wobei der Vorrichtung ein Palettenturm (54) mit einem vertikal beweglichen Fahrstuhl (54b) zugeordnet ist und wobei die Stapelpaletten (55) aus Palettenführungen (58) der Füllstation in den Palettenturm (54) einführbar sind,
dadurch gekennzeichnet, daß der Fahrstuhl an vertikalen Skelettelementen (54a') des Palettenturms (54) verfahrbar ist, die Stapelpaletten (55) im Palettenturm (54) mit einer am Fahrstuhl (54b) abgestützten Transportpalette (56) zu einer Transporteinheit (T;T';T'') verbindbar sind, wobei im Fahrstuhl (54b) mindestens eine Transporteinheit (T;T';T'') mit vollen Stapelpaletten (55) und mindestens eine weitere mit leeren Stapelpaletten (55) aufnehmbar sind.

2. Vorrichtung nach Anspruch 1, dadurch gekennzeichnet, daß die Stapelpaletten (55) auf Palettenführungen (59 in Fig. 2,3; 159 in Fig. 13,14) in den Stapelturm (54) einführbar sind, welche an Palettenführungen (58) der Füllstation anschließen, und daß mehrere eingeführte Stapelpaletten (55) im Gefolge von Vertikalbewegungen des Fahrstuhles (54b) mit einer am Fahrstuhl (54b) abgestützten Transportpalette (56) zur Transporteinheit (T;T';T'') verbindbar sind, wobei sich im Palettenturm jeweils wenigstens eine Transportpalette (56) zur Aufnahme von gefüllten Stapelpaletten (55) und eine weitere für leere Stapelpaletten (55) befindet.

3. Vorrichtung nach Anspruch 2, dadurch gekennzeichnet, daß die rückseitig aus dem Palettenturm (54) ausfahrbaren bzw. einfahrbaren Transporteinheiten (T;T′;T˝ in Fig. 9-11) bei gleicher Höhe eine unterschiedliche Anzahl von Stapelpaletten (55 bzw. 155) enthalten und die Transportpaletten (56) in einem gegenseitigen Abstand abstützbar sind,
welcher mindestens der Höhe einer Transporteinheit entspricht.

4. Vorrichtung nach Anspruch 2 oder 3, dadurch gekennzeichnet, daß zur Palettenerkennung an einer Seite der Füllstation ein Signalgeber (61) und am Fahrstuhl (54b) des Palettenturms (54) je über den Transportpaletten (56) weitere Signalgeber (60) angeordnet sind, deren Anzahl der größtmöglichen Palettenanzahl in der Transporteinheit (T′;T′;T˝) und deren gegenseitiger Abstand einer Stapelpalette (55) geringsten Höhe entspricht.

5. Vorrichtung nach einem der vorhergehenden Ansprüche, dadurch gekennzeichnet, daß das die Transporteinheiten transportierende Transportmittel ein für den Transport von Spritzwerkzeugen (14a,14b) eingerichtete Transportfahrzeug (F in Fig. 12a) ist und daß die Transportpaletten (56) je ein das Auflageprofil des Spritzwerkzeuges (14a,14b) der Kunststoff-Spritzgießmaschine nachbildendes Auflageprofil aufweisen.

6. Vorrichtung nach Anspruch 5, dadurch gekennzeichnet, daß das Auflageprofil der Transportpaletten (56) durch zwei parallele, über wenigstens einen Quersteg (56c) miteinander verbundene Führungsschienen (56b) gebildet ist, deren Querschnittsprofil dem Querschnittsprofil der Anlageplatten (14a′;14b′ in Fig. 4) des beim Gießformwechsel auf dem Transportfahrzeug (F) zu transportierenden Spritzwerkzeuges (14a;14b) entspricht.

7. Vorrichtung nach einem der vorhergehenden Ansprüche, dadurch gekennzeichnet, daß die Füllstation für die Stapelpaletten (55) wahlweise innerhalb der Grundrißfläche der Spritzgießmaschine zur unmittelbaren Beschickung durch den Greifer der Entnahmeeinrichtung (H) oder außerhalb der Grundrißfläche der Spritzgießmaschine an deren Stirnseite zur mittelbaren Beschickung über ein Förderband (18) angeordnet ist.

8. Vorrichtung nach einem der Ansprüche 2-7, dadurch gekennzeichnet, daß die Palettenführungen (59) am Profilskelett (54a) des Palettenturms (54) abgestützt und auf einen größeren gegenseitigen Abstand aus der Bahn des Fahrstuhles (54b) steuerbar sind (Fig. 2,3).

9. Vorrichtung nach einem der Patentansprüche 2-7, dadurch gekennzeichnet, daß die Palettenführungen (159) an die parallel zur Verschieberichtung liegenden Wandungen (155a) jeder Stapelpalette (155) angeformt sind und daß die Transportpaletten (56 ) Palettenführungen aufweisen, welche identisch sind mit den Palettenführungen (159) der Stapelpaletten (155) (Fig. 13,14).

10. Vorrichtung nach Anspruch 8 oder 9, dadurch gekennzeichnet, daß die die Palettenführungen (159) bildenden Endabschnitte (155a') der Stapelpaletten (155) unter Vorspannung an den Wandungen (155a) der jeweils nächst unteren Stapelpalette (155) bzw. an den Palettenführungen der Transportpaletten (56) anliegen, wobei an der Vorder- und Rückseite des Palettenturms (54) Sperrstangen ( 65 in Fig. 2) derart angeordnet sind, daß die jeweils auf den Führungen (59 bzw. 159) des Palettenturmes befindliche Stapelpalette (155) für die Ausfahrbewegung frei ist, die darunter liegenden Stapelpaletten jedoch für eine Bewegung gesperrt sind.

## Claims

1. Device for removing injection-moulded parts (63) produced during injection operations from a plastics injection-moulding machine with the aid of parts containers which are filled in a filling station in the vicinity of the injection-moulding machine, and are transferred by means of a delivery device on to a transporting means, and are designed as stackable pallets (stacking pallets 55), the device having associated therewith a pallet tower (54) with a vertically-movable elevator (54b), and the stacking pallets (55) being insertable out of pallet guides (58) of the filling station into the pallet tower (54),
characterised in that the elevator is movable on vertical framework members (54a') of the pallet tower (54), the stacking pallets (55) in the pallet tower (54) may be connected to a transport pallet (56) supported on the elevator (54b) in order to form a transport unit (T; T', T''), whereby at least one transport unit (T; T', T'') with filled stacking pallets (55) and at least one further such transport unit with empty stacking pallets may be accommodated in the elevator (54b).

2. Device according to claim 1, characterised in that the stacking pallets (55) may be inserted on pallet guides (59 in Figs. 2, 3; 159 in Figs. 13, 14) into the stacking tower (54), said pallet guides connecting with pallet guides (58) of the filling station, and in that a plurality of inserted stacking pallets (55) may be connected, during the course of vertical movements of the elevator (54b) with a transport pallet (56), supported on the elevator (54b) to form the transport unit (T; T', T''), at least one transport pallet (56) for accommodating filled stacking pallets (55) and a further such transport pallet for empty stacking pallets being located at any moment in the pallet tower.

3. Device according to claim 2, characterised in that the transport units (T; T', T'' in Figs. 9-11), which are withdrawable from or insertable into the pallet tower (54) at the rear, having the same height, contain a differing number of stacking pallets (55 or 155), and the transport pallets (56) may be supported at a mutual spacing apart which corresponds at least to the height of a transport unit.

4. Device according to claim 2 or 3, characterised in that, for pallet recognition, a signal emitter (61) is disposed at one side of the filling station, and further signal emitters (60) at the elevator (54b) of the pallet tower (54) above each transport pallet (56), the number of such signal emitters corresponding to the largest possible number of pallets in the transport unit (T; T', T'') and their minimum spacing in a stacking pallet (55) of minimum height.

5. Device according to one of the preceding claims, characterised in that the transport means transporting the transport units is a transport vehicle (F in Fig. 12a) designed for transporting injection -moulding tools (14a, 14b), and in that the transport pallets (56) each have a support shape simulating the support shape of the injection-moulding tool (14a, 14b) of the plastics injection-moulding machine.

6. Device according to claim 5, characterised in that the support shape of the transport pallets (56) is formed by two parallel track rods (56b) connected together by at least one cross web (56c) , and whose cross-sectional profile corresponds to that of the support plates (14a', 14b' in Fig. 4) of the injection-moulding tool (14a; 14b) to be transported on the transport vehicle (F) during changeover of moulds.

7. Device according to one of the preceding claims, characterised in that the filling station for the stacking pallets (55) is optionally disposed within the projected surface area of the injection-moulding machine for direct supply by the gripper of the removal device (H), or outwith the projected surface area of the injection-moulding machine for indirect supply via a conveyor belt (18).

8. Device according to one of claims 2 - 7, characterised in that the pallet guides (59) are supported on the framework (54a) of the pallet tower (54) , and may be controllably moved to a larger mutual spacing apart out of the track of the elevator (54b) (Figs. 2, 3).

9. Device according to one of claims 2 - 7, characterised in that the pallet guides (159) are integrally formed on the walls (155a) of each stacking pallet (155) which lie parallel to the direction of displacement, and in that the transport pallets (56) have pallet guides which are identical with the pallet guides (159) of the stacking pallets (155) (Figs. 13, 14).

10. Device according to claim 8 or 9, characterised in that the terminal portions (155a') of the stacking pallets (155) forming the pallet guides (159) abut with initial tension against the walls (155a) of the next stacking pallet (155) beneath in each case, or against the pallet guides of the transport pallets (56), locking bars (65 in Fig. 2) being disposed on the front and rear sides of the pallet tower (54) in such a way that the stacking pallet (155) located at any moment on the guides (59 or 159) of the pallet tower is free to execute the withdrawal movement, yet the stacking pallets located underneath are prevented from moving.

## Revendications

1. Dispositif pour évacuer d'une machine de moulage de matière plastique par injection les pièces moulées par injection (63) qui résultent du processus d'injection, à l'aide de conteneurs de pièces moulées par injection qui sont remplis dans un poste de remplissage dans la région de la machine de moulage par injection, qui sont amenés sur un moyen transporteur au moyen d'un dispositif de transfert et qui sont réalisés sous la forme de palettes empilables (palettes empilables 55), cependant qu'une tour à palettes (54) pourvue d'un dispositif élévateur mobile verticalement (54b) est associée au dispositif, et que les palettes empilables (55) peuvent être introduites dans la tour à palettes (54) en quittant des guide-palettes (58) du poste de remplissage, caractérisé par le fait que le dispositif élévateur peut être déplacé sur des éléments d'ossature verticaux (54a') de la tour à palettes (54), et que les palettes empilables (55) peuvent être reliées dans la tour à palettes (54) à une palette de transport (56) appuyée sur le dispositif élévateur (54b) pour former une unité de transport (T ; T' ; T''), cependant qu'au moins une unité de transport (T ; T' ; T'') garnie de palettes empilables pleines (55) et au moins une autre unité de transport garnie de palettes empilables vides (55) peuvent être reçues dans le dispositif élévateur (54b).

2. Dispositif selon la revendication 1, caractérisé par le fait que les palettes empilables (55) peuvent être introduites dans la tour à palettes (54) sur des guide-palettes (59 sur les figures 2 et 3 ; 159 sur les figures 13 et 14) qui se raccordent à des guide-palettes (58) du poste de remplissage, et par le fait que plusieurs palettes empilables introduites (55) peuvent être reliées, par suite de déplacements verticaux du dispositif élévateur (54b), à une palette de transport (56) qui s'appuie sur le dispositif élévateur (54b), afin de former l'unité de transport (T ; T' ; T''), cependant qu'au moins une palette de transport (56) destinée à recevoir des palettes empilables pleines (55) et au moins une autre palette de transport destinée à des palettes empilables vides (55) se trouvent à chaque fois dans la tour à palettes.

3. Dispositif selon la revendication 2, caractérisé par le fait que les unités de transport (T ; T' ; T'' sur les figures 9 à 11) que l'on peut faire sortir de la tour à palettes (54) ou, respectivement, faire entrer dans celle-ci du côté arrière contiennent au même niveau un nombre différent de palettes empilables (55, respectivement 155), et que les palettes de transport (56) peuvent être soutenues à une distance mutuelle qui correspond au moins à la hauteur d'une unité de transport.

4. Dispositif selon la revendication 2 ou 3, caractérisé par le fait qu'en vue de reconnaître les palettes, un émetteur de signaux (61) est disposé sur un côté du poste de remplissage et d'autres émetteurs de signaux (60) sont disposés sur le dispositif élévateur (54b) de la tour à palettes (54), à chaque fois au-dessus des palettes de transport (56), leur nombre correspondant au nombre maximal possible des palettes dans l'unité de transport (T ; T' ; T''), et leur distance mutuelle correspondant à une palette empilable (55) dont la hauteur est la plus faible.

5. Dispositif selon l'une des revendications précédentes, caractérisé par le fait que le moyen transporteur qui transporte les unités de transport est un chariot transporteur (F sur la figure 12a) aménagé pour le transport de moules de moulage par injection (14a, 14b), et par le fait que les palettes de transport (56) présentent chacune un profil d'appui ressemblant au profil d'appui du moule de moulage par injection (14a, 14b) de la machine de moulage de matière plastique par injection.

6. Dispositif selon la revendication 5, caractérisé par le fait que le profil d'appui des palettes de transport (56) est constitué par deux rails de guidage parallèles (56b) qui sont reliés entre eux par l'intermédiaire d'au moins une traverse (56c) et dont le profil en section transversale correspond au profil en section transversale des plaques d'appui (14a', 14b' sur la figure 4) du moule de moulage par injection (14a, 14b) qui doit être transporté sur le chariot transporteur (F) lors du changement de moule.

7. Dispositif selon l'une des revendications précédentes, caractérisé par le fait que le poste de remplissage destiné aux palettes empilables (55) est disposé au choix à l'intérieur de la surface en projection sur un plan horizontal de la machine de moulage par injection en vue d'une alimentation directe par l'organe de préhension du dispositif de reprise (H), ou à l'extérieur de la surface en projection sur un plan horizontal de la machine de moulage par injection, sur le côté frontal de celle-ci, en vue d'une alimentation indirecte par l'intermédiaire d'une bande transporteuse (18).

8. Dispositif selon l'une des revendications 2 à 7, caractérisé par le fait que les guide-palettes (59) sont appuyés sur l'ossature profilée (54a) de la tour à palettes (54), et qu'ils sont commandés pour prendre une plus grande distance mutuelle à partir du trajet du dispositif élévateur (54b) (figures 2 et 3).

9. Dispositif selon l'une des revendications 2 à 7, caractérisé par le fait que les guide-palettes (159) sont formés sur les parois (155a) de chaque palette empilable (155) qui sont situées parallèlement à la direction du déplacement, et par le fait que les palettes de transport (56) comportent des guide-palettes qui sont identiques aux guide-palettes (159) des palettes empilables (155) (figures 13 et 14).

10. Dispositif selon la revendication 8 ou 9, caractérisé par le fait que les parties terminales (155a') des palettes empilables (155) qui forment les guide-palettes (159) portent avec une contrainte initiale sur les parois (155a) de la palette empilable (155) qui est à chaque fois la palette inférieure ou, respectivement, sur les guide-palettes des palettes de transport (56), cependant que des barres d'arrêt (65 sur la figure 2) sont disposées sur les côtés avant et arrière de la tour à palettes (54) d'une manière telle que la palette empilable (155) qui se trouve à chaque fois sur les guidages (59, respectivement 159) de la tour à palettes soit libre pour le déplacement de sortie, mais que les palettes empilables qui sont situées au-dessous de celle-ci soient arrêtées dans leur déplacement.
